# EUROPÄISCHE PATENTSCHRIFT

(11) **EP 1 484 696 B1**
(45) Veröffentlichungstag und Bekanntmachung des Hinweises auf die Patenterteilung: **19.10.2005**
(21) Anmeldenummer: 04013057.7
(22) Anmeldetag: 03.06.2004
(51) Int. Cl.: G06F 17/30

(54) **Verfahren zum Optimieren eines auf eine Netzwerkseite verweisenden Verweises**
Method for Optimising a Link to Another Webpage
Procédé pour optimaliser un link vers une page différente sur le WEB

(30) Priorität: 07.06.2003 DE 10325998
(43) Veröffentlichungstag der Anmeldung: 08.12.2004
(73) Patentinhaber: HURRA Communications GmbH, 70599 Stuttgart (DE)
(72) Erfinder: Schweier, René, 70599 Stuttgart (DE)
(74) Vertreter: Dreiss, Fuhlendorf, Steimle & Becker

(56) Entgegenhaltungen:
- DE-A- 10 138 817
- GB-A- 2 378 775
- US-A- 5 960 409
- US-A1- 2002 184 089

## Beschreibung

Die Erfindung betrifft ein Verfahren zum Optimieren eines Verweises, der auf eine erste Netzwerkseite eines ersten Servers verweist und auf einer zweiten Netzwerkseite eines zweiten Servers dargestellt wird, wobei
- mittels eines einem Benutzer zugeordneten Clients die zweite Netzwerkseite von dem zweiten Server angefordert wird;
- die zweite Netzwerkseite von dem zweiten Server an den Client übertragen wird;
- der Benutzer den auf der zweiten Netzwerkseite dargestellten Verweis aktiviert.

Die Erfindung betrifft auch ein Computersystem umfassend einen ersten Server, einen zweiten Server, einen einem Benutzer zugeordneten Client, mindestens einen auf eine Netzwerkseite des ersten Servers verweisenden und auf einer Netzwerkseite des zweiten Servers darstellbaren Verweis und ein Kommunikationsnetzwerk, mittels dessen eine Kommunikation zwischen dem ersten Server und dem Client sowie zwischen dem zweiten Server und dem Client möglich ist, wobei
- mittels des Clients von dem zweiten Server eine Netzwerkseite anforderbar ist;
- die zweite Netzwerkseite von dem zweiten Server an den Client übermittelbar ist;
- der auf der zweiten Netzwerkseite dargestellte Verweis aktivierbar ist.

Außerdem betrifft die Erfindung ein Computerprogramm, das auf einem Rechengerät, insbesondere auf einem Server, ablauffähig ist.

Als Server wird beispielsweise ein mit einem Kommunikationsnetzwerk verbundener Computer bezeichnet, auf dem eine Software abläuft, so dass der Server geeignet ist, bestimmte Dienste bereitzustellen. Diese Dienste können beispielsweise das Bereitstellen von Informationen oder Ressourcen (beispielsweise Speicherplatz, Rechenkapazität oder ein Zugang zu einem Kommunikationsnetzwerk) sein.

Die Dienste werden typischerweise durch einen sogenannten Client in Anspruch genommen. Dazu wird von dem Client mittels eines Kommunikationsnetzwerks, beispielsweise dem Internet, eine Anfrage an den Server gestellt. Der Server wertet die eingehende Anfrage aus, überprüft gegebenenfalls eine Berechtigung des Clients zum Stellen der Anfrage und übermittelt der Anfrage entsprechende Informationen beziehungsweise stellt angeforderte Ressourcen zur Verfügung.

Häufig werden Informationen von einem Server in Form von sogenannten Netzwerkseiten (auch Internetseiten oder kurz Seiten genannt) einem Client zur Verfügung gestellt.

Zur Beschreibung des Inhalts einer Netzwerkseite wird eine Seitenbeschreibungssprache verwendet. Heutzutage wird dazu überwiegend die standardisierte Seitenbeschreibungssprache HTML (Hypertext Mark up Language) eingesetzt. HTML erlaubt es, auf einfache Weise den Inhalt und das Aussehen einer Netzwerkseite in einem sogenannten HTML-Dokument zu beschreiben. Fordert beispielsweise ein Client Informationen von einem Server an, so übermittelt der Server ein die angeforderten Informationen enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument einem speziellen Computerprogramm (sogenannter Browser) zugeführt, das in der Lage ist, HTML-Dokumente zu interpretieren und mittels einer grafischen Oberfläche auf einem Computermonitor darzustellen.

Die von dem Server an den Client übermittelten Netzwerkseiten können bereits vor der Anforderung durch den Client erzeugt und an geeigneter Stelle abgespeichert worden sein. Derartige Netzwerkseiten bezeichnet man als statische Netzwerkseiten.

Häufig wird von einem Client jedoch eine derart spezifische Anfrage an den Server gestellt, dass die angeforderten Informationen enthaltende Netzwerkseiten dynamisch von dem Server erzeugt werden. Dies ist beispielsweise der Fall, wenn ein Benutzer mittels des Clients an einen als Suchmaschine ausgebildeten Server eine Anfrage in Form eines Suchbegriffes sendet. Die Suchmaschine ermittelt nach einem vorgebbaren Algorithmus anhand des Suchbegriffes Informationen, die mit dem Suchbegriff assoziiert werden. In Abhängigkeit von den ermittelten Informationen wird automatisch eine dynamische Netzwerkseite von dem Server erzeugt und an den Client übermittelt.

Eine Vielzahl von Clients und Servern kommuniziert mittels des Internets und bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem Verzeichnis und einem der Netzwerkseite zugeordneten Namen zusammengesetzt. Eine URL erlaubt es, die dieser URL zugeordnete Netzwerkseite direkt von einem Client aus anzuwählen. Dazu gibt ein Benutzer beispielsweise mittels einer Tastatur die URL in einem speziellen Eingabefeld des Browsers ein. Der Client generiert daraufhin eine Anfrage an den entsprechenden Server, der dann die angeforderte Netzwerkseite an den Client übermittelt.

Innerhalb eines HTML-Dokuments ist es möglich, URLs weiterer Netzwerkseiten beziehungsweise HTML-Dokumente anzugeben. Derartige URLs werden als Verweis oder als Hyperlink (kurz: Link) bezeichnet. Auf statischen Netzwerkseiten dargestellte Verweise werden im folgenden als statische Verweise bezeichnet. Analog werden auf dynamischen Netzwerkseiten dargestellte Verweise im folgenden als dynamische Verweise bezeichnet.

Werden Verweise mittels eines Browsers einem Benutzer dargestellt, so hat der Benutzer die Möglichkeit, einen dargestellten Verweis anzuwählen und sich die der angewählten URL entsprechende Netzwerkseite anzeigen zu lassen. Dabei kann sich die angewählte Netzwerkseite insbesondere auch auf einem anderen Server befinden.

Häufig wird von einem ersten Server ein zweiter Server beauftragt, auf Netzwerkseiten, die von dem zweiten Server übermittelt werden, einen Verweis auf eine Netzwerkseite des ersten Servers darzustellen. Ein solcher Verweis kann beispielsweise ein sogenanntes Werbe-Banner sein, das mittels einer textuellen und/oder grafischen Darstellung für ein über den ersten Server zu beziehendes Produkt oder eine über den ersten Server vermittelte Dienstleistung wirbt. Dabei sind einem auf der zweiten Netzwerkseite dargestellten Verweis typischerweise Text-, Klang- und/oder Graphikelemente zugeordnet, die mittels des Browsers dem Benutzer dargestellt werden. Der Begriff "Verweis" umfasst somit auch die Gesamtheit der dem Verweis zugeordneten Informationen.

Ein Produkt kann insbesondere auch eine von dem ersten Server angebotene Information sein. Als Produkt kann ferner ein von dem ersten Server angebotener Zugang zu einem geschützten Speicherbereich sein, in welchem weitere Informationen abgelegt sind und abgerufen werden können. Derartige Informationen können beispielsweise Nachrichten, Börsenkurse, sowie sonstige Text-, Musik- oder Bilddateien sein.

Häufig sind die von dem zweiten Server an den Client übermittelten Informationen auf mehrere Netzwerkseiten verteilt, wobei zunächst nur eine erste Netzwerkseite an den Client übermittelt wird. Der Client fordert dann sukzessive eine der weiteren Netzwerkseiten von dem zweiten Server an.

Ist der zweite Server eine Suchmaschine, so kann der erste Server den zweiten Server beauftragen, auf einer in Abhängigkeit eines von einem Benutzer eingegebenen Suchbegriffs erzeugten Netzwerkseite, einen Verweis auf eine dem ersten Server zugeordnete Netzwerkseite darzustellen.

Je mehr Verweise auf einer von einem zweiten Server an einen Client übermittelten Netzwerkseite dargestellt werden, desto größer ist üblicherweise die Datenmenge der zu übertagenden Netzwerkseite. Dies führt zu einer erhöhten Belastung des Kommunikationsnetzwerks. Dies wird noch verstärkt, wenn aufgrund der Vielzahl von Verweisen mehrere Netzwerkseiten von dem zweiten Server an den Client übertragen werden. Ferner benötigt eine mit einem oder mehreren Verweisen angereicherte Netzwerkseite mehr Speicherplatz, sowohl auf dem übermittelnden zweiten Server, als auch auf dem empfangenden Client.

Insbesondere wenn der zweite Server als Suchmaschine ausgebildet ist, besteht die Informationen, die in Abhängigkeit eines von dem Client an den Server übermittelten Suchbegriffs von der Suchmaschine erzeugt wird, aus einer Liste von Verweisen zu Netzwerkseiten, die von anderen Servern zur Verfügung gestellt werden. Um die Relevanz der von einer Suchmaschine auf eine Anfrage zur Verfügung gestellten Informationen und Verweise zu erhöhen ist es bekannt, diese Informationen und Verweise ebenso wie die Suchbegriffe mittels Methoden der Computerlinguistik zu klassifizieren und diese Klassen einander zuzuordnen. Mittels einer Zuordnung von klassifizierten Suchbegriffen und Informationen wählt die Suchmaschine anhand eines von einem Client empfangenen Suchbegriffs geeignete Informationen und Verweise aus.

Die Anzahl der von einem Server beantwortbaren Anfragen hängt unter anderem von der Datenmenge der Netzwerkseiten ab, die pro Anfrage von dem Server an den anfragenden Client übermittelt werden. Statische Netzwerkseiten müssen beispielsweise von dem Server aus einem Speicher ausgelesen werden. Zur Erzeugung dynamischer Netzwerkseiten muss der jeweilige Inhalt (Informationen) aus dem Speicher ausgelesen und in die Netzwerkseite integriert werden. Die Netzwerkseiten werden dann in Abhängigkeit der Schichten eines zur Datenübertragung verwendeten Netzwerkprotokolls (z.B. TCP/IP) bearbeitet. Das heißt, je größer die von einem Server zu übertragende Datenmenge für eine Anfrage ist, desto geringer ist für weitere, zeitnahe Anfrage zur Verfügung stehende Leistungsfähigkeit des Servers.

Die Netzwerkseiten werden von dem Server an den Client mittels des Kommunikationsnetzwerks übermittelt. Dabei ist die Datenmenge, die von dem Kommunikationsnetzwerk pro Zeiteinheit übertragen werden kann, begrenzt.

Der Client bearbeitet eine empfangene Netzwerkseite zunächst in Abhängigkeit des verwendeten Netzwerkprotokolls und speichert die Netzwerkseite dann in einem geeigneten Speicherbereich ab. Der Browser bearbeitet die Netzwerkseite dann derartig, dass die Informationen auf einem Monitor dargestellt werden können.

Um die Rechenleistung und die Speicherkapazitäten des Servers und des Clients möglichst wenig zu belasten und um das Kommunikationsnetzwerk durch die Übertragung einer möglichst geringe Datenmenge zu entlasten, ist es wünschenswert, nur derartige Verweise auf der von der Suchmaschine erzeugten Netzwerkseite darzustellen, die für den Client bzw. für den Benutzer auch tatsächlich von Interesse sind.

Typischerweise ist dem zweiten Server daran gelegen, möglichst aktuelle Verweise auf seinen Netzwerkseiten darzustellen. Da der zweite Server die Verweise auf die Netzwerkseiten des ersten Servers im Allgemeinen gegen Bezahlung auf seinen Netzwerkseiten darstellt, ist außerdem dem ersten Server daran gelegen, nur eine begrenzte Anzahl von Verweisen auf den Netzwerkseiten des zweiten Servers darstellen zu lassen.

Aus der US 5,960,409 ist ein Verfahren zum Bewerten eines Verweises, der bspw. als ein Banner ausgebildet ist, bekannt. Der Verweis verweist auf eine erste Netzwerkseite eines ersten Servers und wird auf einer zweiten Netzwerkseite eines zweiten Servers dargestellt. Die zweite Netzwerkseite kann mittels eines einem Benutzer zugeordneten Clients von dem zweiten Server angefordert werden. Dann wird die zweite Netzwerkseite von dem zweiten Server an den Client übertragen. Der Benutzer kann den auf der zweiten Netzwerkseite dargestellten Verweis aktivieren. Zum Bewerten des Verweises wird die Anzahl der Aktivierungen (sog. Clicks) des Verweises erfasst.

Um durch eine Reduzierung der Datenmenge einer Netzwerkseite die Rechenleistung des Servers und des Client, sowie die Übertragungsleistung des Kommunikationsnetzwerks möglichst gering zu belasten und effizient auszunutzen, ist es daher Aufgabe der Erfindung, eine Möglichkeit zur Verfügung zu stellen, um weitgehend nur derartige Verweise bzw. derartig gestaltete Verweise auf einer Netzwerkseite eines Servers darzustellen, die für einen Client bzw. Benutzer auch von Interesse sind.

Die Aufgabe wird dadurch gelöst, dass in Abhängigkeit des durch den Benutzer aktivierten Verweises automatisch eine Bewertung des Verweises durchgeführt wird, wobei die Bewertung in Abhängigkeit einer Häufigkeit der Aktivierung des Verweises durch beliebige Benutzer durchgeführt wird. Bei einem statischen Verweis wird in Abhängigkeit der Bewertung automatisch geprüft, ob der Verweis auf der zweiten Netzwerkseite weiterhin dargestellt werden soll. Bei einem dynamischen Verweis, der in Abhängigkeit des mindestens einen vorgebbaren Parameters erzeugt wird, wird in Abhängigkeit der Bewertung des Verweises automatisch geprüft, ob der mindestens eine und/oder ein anderer vorgebbarer Parameter verändert werden soll.

Mit der vorliegenden Erfindung kann die Effizienz des ersten Servers, des zweiten Servers, des Clients sowie des Kommunikationsnetzwerks und damit des gesamten Client-Server-Netzwerk gesteigert werden, indem die zu speichernde und zu übertragende Datenmenge deutlich verringert werden kann. Die Erfindung schlägt also eine besonders effiziente Art der Datenverarbeitung in einem Client-Server-Netzwerk vor.

Eine Häufigkeit der Aktivierung des auf die erste Netzwerkseite verweisenden Verweises ist die Häufigkeit der Anwahl der ersten Netzwerkseite durch den Client, falls der Client durch den Verweis auf die erste Netzwerkseite aufmerksam gemacht wurde. Dies ist beispielsweise immer dann der Fall, wenn der Verweis mittels des Browsers auf dem Client dargestellt wird und durch Aktivieren des Verweises die erste Netzwerkseite angefordert wird.

Ein besonders häufig aktivierter Verweis ist ein Hinweis dafür, dass die Netzwerkseite, die das Ziel des Verweises darstellt, von hohem Interesse für die Benutzer ist. Anhand einer ermittelten Häufigkeit der Aktivierung eines Verweises kann somit eine Bewertung des Verweises dahingehend erfolgen, dass eine Aussage darüber ableitbar ist, ob der Verweis weiterhin auf der zweiten Netzwerkseite dargestellt werden soll oder ob er zukünftig in veränderter Form dargestellt werden soll. Dadurch kann erreicht werden, dass weder die Rechenleistung des Servers und des Clients noch das Übertragungsnetzwerk durch die Bearbeitung, Speicherung und Übertragung von für den Benutzer uninteressanten Verweisen belastet werden.

Ist auf der zweiten Netzwerkseite ein Verweis dargestellt, dem Text-, Sound- und/oder Bildinformationen zugeordnet sind und wird die Häufigkeit der Aktivierung des Verweises protokolliert, so kann automatisch entschieden werden, ob der Verweis von der zweiten Netzwerkseite entfernt werden soll oder ob die Art oder die Anzahl der dem Verweis zugeordneten Informationen geändert werden sollen. Beispielsweise kann ein Text verkürzt oder durch einen anderen ersetzt werden oder es kann eine graphische Ausgestaltung entfernt oder durch eine andere ersetzt werden.

Ist der zweite Server als eine Suchmaschine ausgebildet, so wird die zweite Netzwerkseite in Abhängigkeit eines von dem Client übermittelten Suchbegriffs erzeugt. Dabei stellt der Suchbegriff beispielsweise einen Parameter dar, in Abhängigkeit dessen die zweite Netzwerkseite erzeugt wird. In Abhängigkeit der Bewertung des Verweises kann gemäß dem erfindungsgemäßen Verfahren automatisch entschieden werden, ob bei einer wiederholten Erzeugung der zweiten Netzwerkseite, beispielsweise nach erneuter Anfrage mittels des Suchbegriffs durch einen Client, der Verweis erneut dargestellt wird.

Der Parameter kann auch eine Zeitspanne und/oder einen Zeitpunkt beschreiben. Es ist vorstellbar, ein Werbe-Banner auf einer Netzwerkseite darzustellen, wenn diese Netzwerkseite innerhalb einer bestimmten Zeitspanne oder ab einem bestimmten Zeitpunkt erzeugt wird. Beispielsweise kann ein Werbe-Banner auf einer Netzwerkseite dargestellt werden, wenn diese Netzwerkseite zwischen 18 Uhr und 19 Uhr erzeugt wurde. Ein solches Werbe-Banner könnte beispielsweise auf eine erste Netzwerkseite verweisen, die über abendliche Freizeitangebote informiert. Es ist vorstellbar, dass mittels des erfindungsgemäßen Verfahrens automatisch erkannt wird, dass die Zeitspanne verändert werden soll, um die Akzeptanz zu erhöhen. Ebenso ist es vorstellbar, eine grafische Ausgestaltung oder eine Textformulierung eines Werbe-Banners zu verändern, um damit eine Akzeptanz zu erhöhen, einen Platzbedarf auf der zweiten Netzwerkseite zu optimieren und/oder das Datenmenge des Verweise und damit den benötigten Speicherplatz und die Belastung des Kommunikationsnetzwerks zu verringern.

Der mindestens eine Parameter kann ferner beispielsweise ein der ersten Netzwerkseite zugeordneter Suchbegriff, eine Zeitdauer, eine Häufigkeit, eine grafische Ausgestaltung oder eine Textformulierung des Verweises beschreiben.

In einer bevorzugten Ausführungsform wird die Bewertung in Abhängigkeit mindestens eines auf dem ersten Server von dem Benutzer initiierten Vorgangs durchgeführt. Diese Ausführungsform hat den Vorteil, dass die Bewertung nicht allein von der Häufigkeit der Aktivierung eines Verweises abhängig ist, sondern auch Aktionen des Benutzers auf dem ersten Server berücksichtigt. Damit wird verhindert, dass ein Benutzer einen Verweis aktiviert (wodurch die Häufigkeit der Aktivierung erhöht wird), aber beispielsweise noch während des Ladens der ersten Netzwerkseite den Ladevorgang abbricht, was zu verfälschten Ergebnissen führen kann.

Als Vorgang wird beispielsweise ein Produkt gekauft, eine Dienstleistung, eine Information und/oder eine weitere, dem ersten Server zugeordnete Netzwerkseite angefordert. Diese Vorgangsarten sind besonders geeignet, ein tatsächliches Interesse des Benutzers aufzuzeigen und können damit besonders gut dazu verwendet werden, Verweise in Abhängigkeit von einem Interesse des Benutzers darzustellen und somit Speicherplatz und Rechenzeit einzusparen bzw. das Kommunikationsnetzwerk nicht unnötig zu belasten.

Vorzugsweise wird bei dem Aktivieren des Verweises automatisch eine Quelleninformation abgespeichert und die Bewertung des Verweises in Abhängigkeit der Quelleninformation durchgeführt. Die Quelleninformation (sogenannter Referer) gibt an, auf welcher Netzwerkseite ein aktivierter Verweis dargestellt wurde. Beispielsweise ist der Referer des Verweises, der auf der zweiten Netzwerkseite dargestellt wird und auf die erste Netzwerkseite verweist, die der zweiten Netzwerkseite zugeordnete URL. Diese Information wird bei dem Aktivieren eines Verweises mit übermittelt. Damit ist es dem ersten Server möglich, den zweiten Server zu bestimmen, der die zweite Netzwerkseite an Client übermittelt hat, auf der der Verweis auf die erste Netzwerkseite dargestellt war. Damit ist es dem ersten Server ferner möglich zu unterscheiden, ob ein Client die erste Netzwerkseite direkt angefordert hat, beispielsweise durch direkte Anwahl der der ersten Netzwerkseite zugeordneten URL mittels des Browsers, oder ob der Client die erste Netzwerkseite durch Aktivieren eines auf der zweiten Netzwerksseite dargestellten Verweises angefordert hat.

Vorzugsweise wird anhand der Quelleninformation und/oder anhand von Benutzerinformationen automatisch eine Bewertung des Benutzers durchgeführt. Dazu wird dem Benutzer vorteilhafterweise eine Benutzerkennung zugeordnet. Eine Benutzerkennung kann beispielsweise automatisiert von dem ersten Server und/oder dem zweiten Server erzeugt werden anhand von Informationen, die von dem dem Benutzer zugeordneten Client bei der Abfrage einer Netzwerkseite übertragen werden. Eine Benutzerkennung kann insbesondere eine Kennung des Client, beispielsweise dessen IP-Adresse (Internet Protocol Adresse), sein. Eine Benutzerkennung kann beispielsweise mittels eines sogenannten Cookies realisiert werden. Ein Cookie wird von dem ersten und/oder dem zweiten Server erzeugt und bei dem Client abgelegt. Fordert der Client erneut eine Netzwerkseite von dem ersten bzw. zweiten Server an, so wird das von dem jeweiligen Server erzeugte Cookie von dem Client an diesen Server übermittelt. Damit ist es dem ersten und/oder dem zweiten Server möglich festzustellen, welcher Client oder Benutzer eine Netzwerkseite anfordert. Daraus können dann statistische Informationen darüber abgeleitet werden, wie häufig ein Client oder Benutzer eine Netzwerkseite anfordert. Dies ermöglicht es dem ersten und/oder zweiten Server, client- bzw. benutzerspezifische Informationen zur Verfügung stellen, und insbesondere die Auswahl und Darstellung der auf der an den Client übermittelten Netzwerkseite dargestellten Verweise client- bzw. benutzerspezifisch zu gestalten. Eine Statistik über die Häufigkeit der von einem Client bzw. Benutzer angeforderten Netzwerkseiten ist ein Beispiel für eine Benutzerinformation.

Eine Benutzerinformation könnte also insbesondere auch als Clientinformation bezeichnet werden.

Eine Bewertung des Benutzers kann auch hinsichtlich weiterer Kriterien erfolgen. Diese Kriterien geben beispielsweise an, wie lange ein Benutzer bereits Dienste des ersten Servers in Anspruch nimmt (Kundendauer), wie hoch der Austausch an Informationen beziehungsweise Dienstleistungen zwischen dem ersten Server und dem Benutzer waren (Umsatz), wie das Zahlungsverhalten des Benutzers ist oder wie viele Dienstleistungen beziehungsweise Informationen von dem Benutzer angefordert wurden (Bestellungen).

In einer bevorzugten Ausführungsform wird die Bewertung des Verweises zusätzlich in Abhängigkeit der Benutzerkennung und/oder der Bewertung des Benutzers durchgeführt. Dies ermöglicht eine besonders präzise Bewertung eines Verweises. So kann beispielsweise die Bewertung eines Verweises herabgestuft werden, wenn sich herausstellt, dass der Verweis nur von Benutzern aktiviert wird, die keine oder nur wenige Bestellungen bei dem ersten Server tätigen. Ebenso kann die Bewertung eines Verweises herabgestuft werden, wenn sich herausstellt, dass dieser Verweis zwar häufig, jedoch nur von einer kleinen Anzahl verschiedener Benutzer aktiviert wird.

In einer vorteilhaften Weiterbildung des Verfahrens wird das Ergebnis der Bewertung automatisch derart abgespeichert, dass es von einem bestimmbaren Nutzer abrufbar ist. Der bestimmbare Nutzer kann beispielsweise der Betreiber des ersten Servers sein. Die Informationen können über ein sogenanntes Portal auf speziellen von dem zweiten Server generierten Netzwerkseiten dem bestimmbaren Nutzer dargestellt werden. Derartige Netzwerkseiten werden typischerweise automatisiert von dem zweiten Server generiert und erlauben somit dem Nutzer auf besonders komfortable Weise, einen Überblick über die Bewertung einzelner Verweise zu erhalten.

In einer bevorzugten Ausführungsform wird die Bewertung des Verweises und/oder eine Prüfung der Bewertung des Verweises zusätzlich in Abhängigkeit eines von dem bestimmbaren Nutzer vorgebbaren Schwellwertes durchgeführt. Ein solcher Schwellwert kann beispielsweise angeben, dass ein Verweis dann nicht mehr auf der zweiten Netzwerkseite dargestellt werden soll, wenn die Anzahl der Aktivierungen des Verweises, beispielsweise durch eine bestimmbare Menge von Benutzern, den vorgebbaren Schwellwert unterschreitet. Dies ermöglicht auf besonders einfache Weise eine Einflussnahme des Nutzers beziehungsweise des Betreibers des ersten Servers auf die Bewertung beziehungsweise die Prüfung der Bewertung eines Verweises.

In einer bevorzugten Ausführungsform, bei der dem zweiten Server eine Suchmaschine zugeordnet ist, wird der mindestens eine vorgebbare Parameter durch einen Suchbegriff bestimmt, den der Benutzer an die Suchmaschine übermittelt. In Abhängigkeit von dem übermittelten Suchbegriff wird die den Verweis auf die erste Netzwerkseite enthaltende zweite Netzwerkseite erzeugt. In Abhängigkeit von dem Ergebnis der Prüfung des Verweises wird die Suchmaschine veranlasst, den Verweis bei einer erneuten Suchanfrage auf der daraufhin erzeugten Netzwerkseite nicht mehr oder in veränderter Form darzustellen. Dies kann sowohl automatisiert als auch durch den Nutzer manuell vorgenommen werden.

Insbesondere bei Suchmaschinen werden Verweise in Abhängigkeit von durch Suchbegriffe definierte Anfragen auf der zweiten Netzwerkseite dargestellt. Dabei kann es im Interesse des Betreibers des ersten Servers sein, einen Verweis auf die erste Netzwerkseite auf einer von dem zweiten Server generierten zweiten Netzwerkseite nicht mehr darzustellen, wenn eine Prüfung der Bewertung des Verweises ergibt, dass dieser Verweis beispielsweise nur selten aktiviert wird oder zu keinen nennenswerten Umsätzen führt.

In einer besonders vorteilhaften Weiterbildung des Verfahrens ist dem Verweis ein Produkt oder eine Produktgruppe zugeordnet. Dies ermöglicht es dem ersten Server, gezielte Verweise zu einzelnen von dem Server angebotenen Produkten oder Produktgruppen auf von dem zweiten Server anforderbaren Netzwerkseiten darzustellen zu lassen. Ist der zweite Server beispielsweise eine Suchmaschine, kann diese in Abhängigkeit von einer durch den Suchbegriff definierten Anfrage einen Verweis zu einem von dem ersten Server angebotenen Produkt bzw. zu einer von dem ersten Server angebotenen Netzwerkseite, die eine Beschreibung des Produkts oder der Produktgruppe enthält, darstellen. Durch Aktivieren des Verweises kann der Benutzer dann die dem Produkt oder der Produktgruppe zugeordneten Netzwerkseite des ersten Servers anfordern.

Eine Produktgruppe kann beispielsweise anhand der Branche ermittelt werden, in der ein diese Produkte vertreibender Anbieter tätig ist. Eine Produktgruppe kann insbesondere ein Oberbegriff von beliebigem Abstraktionsgrad sein. Für einen bestimmten portablen CD-Player könnte eine Produktgruppe beispielsweise "Elektrokleingerät","tragbares Hifi-Gerät", "CD-Player" oder "Unterhaltungselektronik" sein. Eine Produktgruppe kann im weitesten Sinne aber auch jede beispielsweise durch den Betreiber des ersten Servers durchgeführte Klassifizierung eines Produkts sein. Kriterien für eine derartige Klassifizierung können beispielsweise der Preis oder eine Gewinnmarge sein. Für eine derartige Klassifizierung können insbesondere auch Daten aus einem dem ersten Server zugeordneten Warenwirtschaftssystem verwendet werden. Eine Produktgruppe kann insbesondere auch jede beliebige vorgebbare Menge von Produkten sein.

Es kann vorgesehen sein, dass bei dem Aktivieren des Verweises eine Kennung des dem Verweis zugeordneten Produkts oder der Produktgruppe an den ersten Server übermittelt wird. Dies ermöglicht es dem ersten Server beispielsweise zu protokollieren, wie häufig ein bestimmtes Produkt oder eine Produktgruppe durch Aktivieren eines Verweises nachgefragt wird. Eine derartige Kennung kann beispielsweise eine Produktbezeichnung oder eine dem Produkt zugeordnete Kennnummer sein. Es ist auch möglich, dass diese Kennung nicht explizit an den ersten Server übermittelt wird, sondern bei dem Aktivieren des Verweises stattdessen eine Kennung des aktivierten Verweises an den ersten Server übermittelt wird und dieser daraus (beispielsweise mittels einer Datenbank) das dem Verweis zugeordnete Produkt oder die Produktgruppe und damit die dem Verweis zugeordneten Produkte ermittelt.

Vorteilhafterweise erfolgt die Bewertung des Verweises zusätzlich in Abhängigkeit mindestens einer Information bezüglich des dem Verweis zugeordneten Produkts oder der dem Verweis zugeordneten Produktgruppe. Eine derartige Information ist beispielsweise die Verfügbarkeit des Produkts oder ein Parameter, der angibt, ob eine Produktgruppe gegenwärtig als Sonderangebot angeboten wird. Dies ermöglicht eine noch präzisere Entscheidung, ob und wie ein Verweis auf einer von dem zweiten Server abrufbaren Netzwerkseite dargestellt werden soll.

In einer bevorzugten Ausführungsform wird als die mindestens eine Information bezüglich des Produkts und/oder als die mindestens eine Information bezüglich der Produktgruppe eine Information aus einem Warenwirtschaftsystem verwendet. Ein derartiges Warenwirtschaftssystem stellt vorzugsweise Informationen bezüglich der Kennung, der Verfügbarkeit, des Verkaufspreises, eines Gewinnanteil, des erzielten Umsatzes, der Anzahl von Stornierungen, der Anzahl von Rückläufern, der Anzahl von Produktmängeln, der Anzahl von Zahlungsausfällen und/oder eine Werbeausgabe zu Verfügung.

Diese Ausführungsform ermöglicht eine besonders effektive Beurteilung, ob und wie ein Verweis auf einer von dem zweiten Server zur Verfügung gestellten Netzwerkseite dargestellt werden soll. Außerdem ist es erfindungsgemäß möglich, Produkte oder ganze Produktgruppen, die besonders häufig zwar bestellt aber nicht bezahlt werden oder deren Bestellungen besonders häufig storniert werden, nicht mehr durch einen auf der zweiten Netzwerkseite dargestellten Verweis zu bewerben. Weiter ist es möglich, einen Verweis, dem eine Produktgruppe oder ein Produkt zugeordnet ist, verändert auszugestalten, wenn die Nachfrage geringer wird, der Verweis also seltener aktiviert wird. Dies kann beispielsweise durch eine ansprechendere graphische Ausgestaltung oder ein Hinzufügen von das Produkt betreffenden Details in dem Verweis erreicht werden.

Eine Werbeausgabe ist beispielsweise eine Vergütung, die für die Darstellung des dem Produkt oder der Produktgruppe zugeordneten Verweises durch den zweiten Server an diesen gezahlt werden muss. Ist eine Werbeausgabe für ein Produkt relativ hoch, der Gewinn an diesem Produkt oder der Umsatz mit diesem Produkt aber relativ klein, so kann der zweite Server automatisch veranlasst werden, keinen derartigen Verweis mehr auf den von dem zweiten Server abrufbaren Netzwerkseiten darzustellen.

Vorzugsweise wird die Information bezüglich des Produkts und/oder die Information bezüglich der Produktgruppe automatisch von dem ersten Server ermittelt, was eine besonders schnelle Ausführung des erfindungsgemäßen Verfahrens ermöglicht. Dabei kann der erste Server beispielsweise automatisch von einem (automatisierten) Warenwirtschaftssystem eines Anbieters der Produkte die erforderlichen Informationen erhalten oder von diesem abfragen.

Die Aufgabe wird auch gelöst durch ein eingangs genanntes Computersystem, bei dem
- in Abhängigkeit des durch den Benutzer aktivierten Verweises automatisch eine Bewertung des Verweises durchführbar ist;
- die Bewertung in Abhängigkeit einer Häufigkeit der Aktivierung des Verweises durchführbar ist;
- in Abhängigkeit der Bewertung des Verweises eine Prüfung durchführbar ist um zu ermitteln, ob der Verweis weiterhin auf der zweiten Netzwerkseite dargestellt werden soll, falls der Verweis auf der zweiten Netzwerkseite statisch dargestellt wird; und
- in Abhängigkeit der Bewertung des Verweises eine Prüfung durchführbar ist, um zu ermitteln, ob mindestens ein vorgebbarer Parameter verändert werden soll, falls der Verweis auf der zweiten Netzwerkseite dynamisch in Abhängigkeit des mindestens einen vorgebbaren Parameters erzeugt wird.

Die Vorteile des erfindungsgemäßen Computersystems liegen insbesondere in einer Steigerung der Effizienz des gesamten Computersystems dadurch, dass die Datenmenge der zu speichernden und zu übertragenden Daten reduziert wird.

Vorteilhafterweise sind die Komponenten des Computersystems zur Durchführung des erfindungsgemäßen Verfahrens programmiert.

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Server ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigen:
- Figur 1: ein erfindungsgemäßes Computersystem;
- Figur 2: ein erfindungsgemäßes Computersystem, bei dem der dritte Server als Software ausgebildet ist;
- Figur 3: ein beispielhaftes Ablaufdiagramm des erfindungsgemäßen Verfahrens;
- Figur 4: ein beispielhaftes Ablaufdiagramm des erfindungsgemäßen Verfahrens, wobei der zweite Server als Suchmaschine ausgebildet ist;
- Figur 5: eine schematische Darstellung von Verfahrensschritten, zur Durchführung einer erfindungsgemäßen Bewertung eines Verweises; und
- Figur 6: eine schematische Darstellung von Verfahrensschritten zur Optimierung eines bewerteten Verweises.

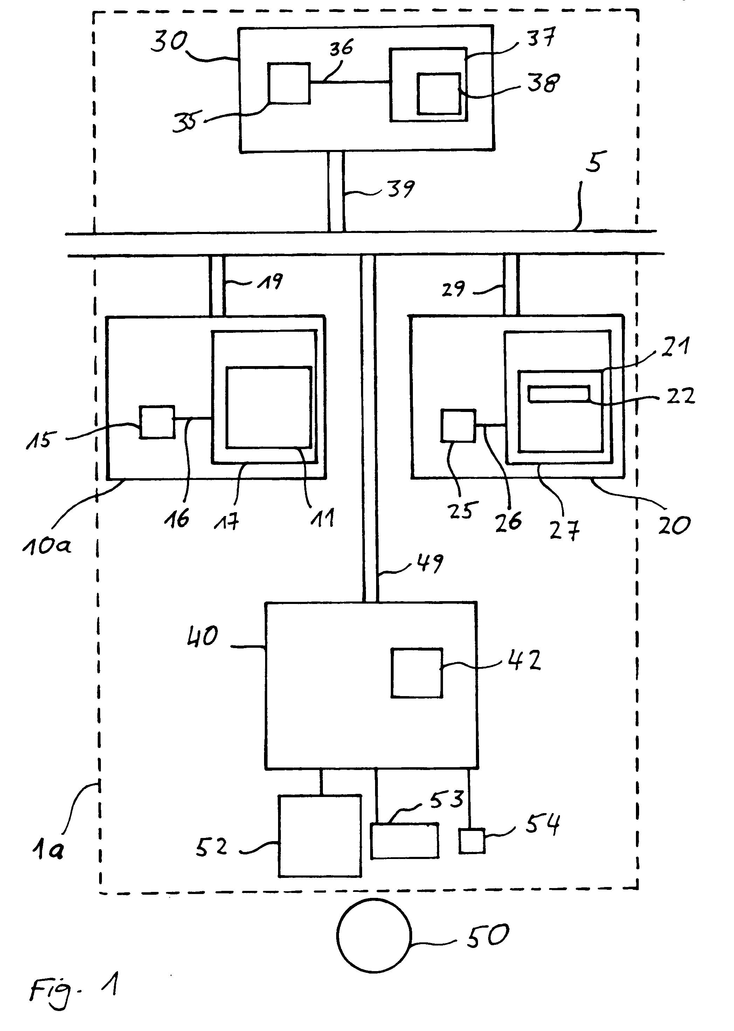

In Figur 1 ist ein Computersystem 1a dargestellt. Ein erster Server 10a weist einen Prozessor 15 und ein mit dem Prozessor 15 über ein Bussystem 16 verbundenes Speicherelement 17 auf. In dem Speicherelement 17 ist eine erste Netzwerkseite 11 abgespeichert. Über eine Datenleitung 19 ist der erste Server 10a mit einem Kommunikationsnetzwerk, beispielsweise dem Internet 5, verbunden.

Ein zweiter Server 20 weist ebenfalls einen Prozessor 25 und ein mit dem Prozessor 25 über ein Bussystem 26 verbundenes Speicherelement 27 auf. In dem Speicherelement 27 ist eine zweite Netzwerkseite 21 abgespeichert, die einen auch als sogenannten "Link" bezeichneten Verweis 22 aufweist. Der Verweis 22 verweist beispielsweise auf die erste Netzwerkseite 11. Der zweite Server 20 ist über eine Datenleitung 29 ebenfalls mit dem Internet 5 verbunden.

Ein dritter Server 30 weist einen Prozessor 35 und ein über ein Bussystem 36 mit dem Prozessor 35 verbundenes Speicherelement 37 auf. In dem Speicherelement 37 ist ein Computerprogramm 38 gespeichert. Das Computerprogramm 38 realisiert beispielsweise die Funktionalität des erfindungsgemäßen Servers, also insbesondere die Bewertung und Optimierung des Verweises 22 und/oder das Veranlassen einer Änderung des darzustellenden Verweises 22. Der dritte Server 30 ist über eine Datenleitung 39 ebenfalls mit dem Internet 5 verbunden.

Über eine Datenleitung 49 ist ein Client 40 mit dem Internet 5 verbunden. Der Client 40 kann beispielsweise als PC (PersonalComputer) ausgebildet sein, auf dem ein Browser abläuft. Dem Client 40 sind ferner ein Monitor 52, eine Tastatur 53, sowie eine Maus 54, zugeordnet, die es einem Benutzer 50 ermöglichen, mit dem Client 40 zu interagieren. Es ist vorstellbar, dass der Client als eine sogenannte Set-Top-Box ausgebildet ist.

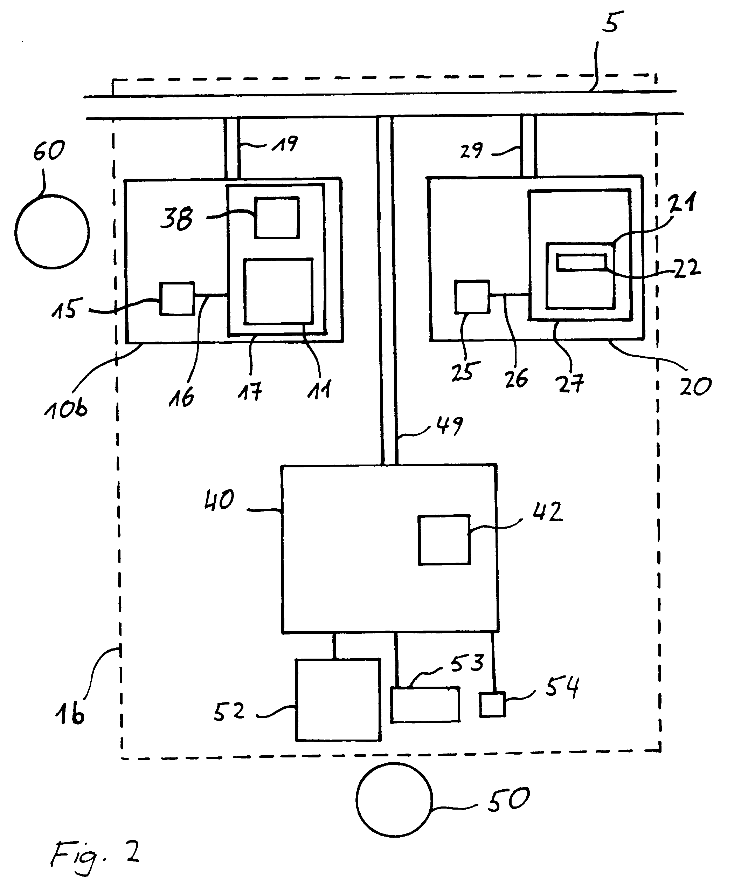

Figur 2 zeigt ein Computersystem 1b, das einen ersten Server 10b, einen zweiten Server 20 und einen Client 40 aufweist. Die Funktionalität des erfindungsgemäßen Servers ist wieder durch das Computerprogramm 38 realisiert. Das Computerprogramm 38 ist in dem Computersystem 1b jedoch in dem Speicherelement 17 des ersten Servers 10b abgespeichert. Damit wird in Figur 2 die Funktionalität des dritten Servers 30 aus Figur 1 also innerhalb des ersten Servers 10b realisiert. In Figur 2 ist ferner ein Nutzer 60 dargestellt. Der Nutzer 60 kann beispielsweise der Betreiber des ersten Servers 10b sein.

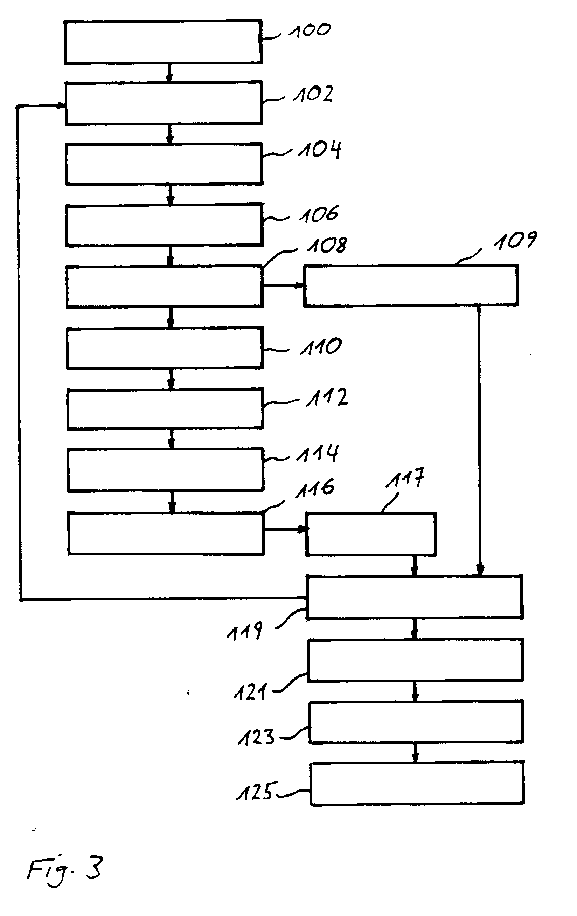

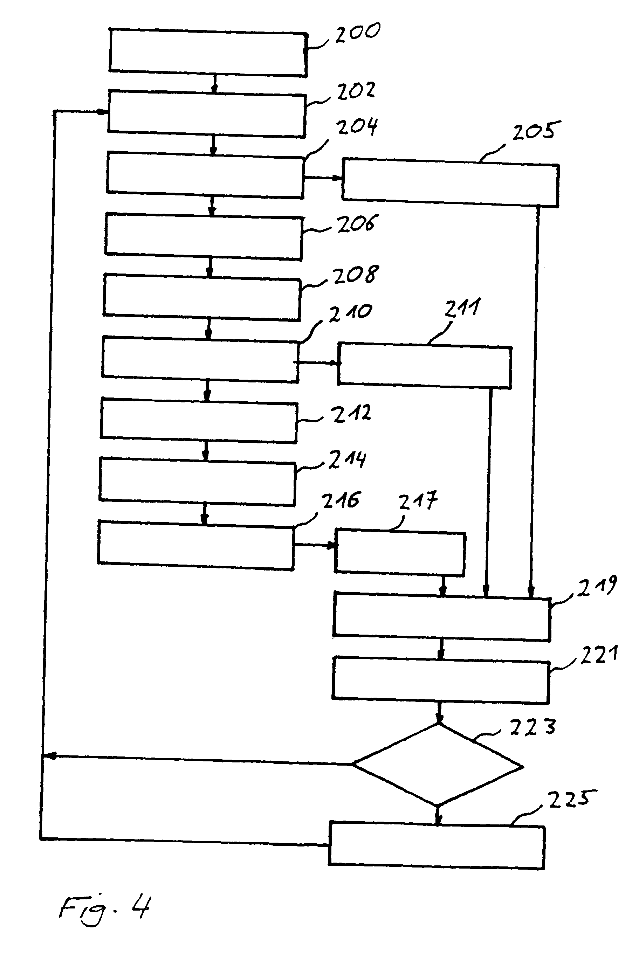

Beispiele für einen Ablauf des erfindungsgemäßen Verfahrens sind in den Figuren 3 und 4 dargestellt. Dabei kann zweckmäßigerweise von folgendem Szenario ausgegangen werden:

Der Nutzer 60 betreibt den ersten Server 10b, über den der Benutzer 50 Produkte oder Dienstleistungen anfordern kann. Der zweite Server 20 stellt eine Netzwerkseite 21 zum Abruf bereit, die einen Verweis 22 auf die erste Netzwerkseite 11 enthält. Diese zweite Netzwerkseite 21 kann beispielsweise ein Einkaufsportal sein, das in Abhängigkeit einer erwünschten Dienstleistung oder einer bestimmten Branche den Verweis 22 darstellt. Selbstverständlich kann die zweite Netzwerkseite 21 ihrerseits über weitere, nicht dargestellte Verweise auf weiteren, nicht dargestellten Netzwerksseiten erreichbar sein.

Das Verfahren startet in einem Schritt 100. In einem Schritt 102 fordert der Benutzer 50 mittels des Clients 40 von dem zweiten Server 20 die zweite Netzwerkseite 21 an. Dies kann beispielsweise durch die direkte Eingabe der der zweiten Netzwerkseite 21 zugeordneten URL geschehen.

In einem Schritt 104 veranlasst der zweite Server 20, dass die zweite Netzwerkseite 21 an den Client 40 übermittelt wird. In einem Schritt 106 wird die zweite Netzwerkseite 21 von dem Browser 42 interpretiert und dem Benutzer 50 mittels des Monitors 52 angezeigt. Auf der zweiten Netzwerkseite 21 ist der Verweis 22 dargestellt. Dem Verweis können weitere textuelle oder graphische Informationen zugeordnet sein, die beispielsweise ein Produkt beschreiben und dieses graphisch darstellen.

In einem Schritt 108 aktiviert der Benutzer 50 den Verweis 22 beispielsweise durch drücken einer an der Maus 54 angebrachten Taste (sogenannter Click). Dadurch veranlasst der Browser 42 in einem Schritt 109, dass dem dritten Server 38 Informationen übermittelt werden. Diese Informationen sind beispielsweise die URL der zweiten Netzwerkseite 21, die URL der durch Aktivieren des Verweises 22 angewählten ersten Netzwerkseite 11, Information bezüglich eines dem Verweis 22 zugeordneten Produkts (Produktkennung) oder einer Produktgruppe, sowie gegebenenfalls Informationen, die geeignet sind, den Benutzer 50 zu identifizieren (Benutzerkennung), sein.

Als Folge der Aktivierung des Verweises 22 wird außerdem durch den Client 40 in einem Schritt 110 die erste Netzwerkseite 11 von dem ersten Server 10a, 10b angefordert und an den Client 40 übermittelt. Dabei kommunizieren der Client 40 und der erste Server 10 beispielsweise über die Datenleitung 49, das Internet 5 und die Datenleitung 19.

In einem Schritt 112 veranlasst der erste Server 10 den Client 40, ein sogenanntes Cookie zu setzen. Bei einem Cookie handelt es sich um eine kleine Datei, die lokal auf dem Client 40 abgespeichert wird und in der Informationen enthalten sind, die beispielsweise Rückschlüsse auf die zweite Netzwerkseite 21, auf die erste Netzwerkseite 11 und/oder auf den Benutzer 50 zulassen.

Mit einem Schritt 114 wählt der Benutzer 50 weitere von dem ersten Server 10a, 10b angebotene Netzwerkseiten an. Typischerweise können diese weiteren Netzwerkseiten unmittelbar oder mittelbar über auf der ersten Netzwerksseite 11 oder anderen Netzwerkseiten dargestellte Verweise erreicht werden. Auf den weiteren Netzwerkseiten werden beispielsweise weitere Produkte oder Informationen angeboten.

In einem Schritt 116 führt der Benutzer 50 eine Bestellung von Produkten oder Dienstleistungen beziehungsweise eine Anforderung von Informationen durch. Dies kann beispielsweise durch Aktivieren einer dafür vorgesehenen Schaltfläche geschehen, die auf einer Netzwerkseite dargestellt wird.

In einem Schritt 117 veranlasst der Client 40, dass die in dem Cookie gespeicherten Daten an den ersten 10a, 10b und/oder den dritten Server 30, 38 übermittelt werden. Anhand des Cookies kann beispielsweise erkannt werden, ob der Benutzer 50, der in dem Schritt 116 eine Bestellung durchführt, die erste Netzwerkseite 11 über den auf der zweiten Netzwerkseite 21 dargestellten Verweis 22 erreicht hat oder auf andere Weise die erste Netzwerkseite 11 angefordert hat. Typischerweise weist ein Cookie auch ein Datum und eine Laufzeit auf. Anhand des Datums kann festgestellt werden, wann das Cookie gesetzt wurde. Nach Ablauf der Laufzeit wird das Cookie automatisch auf dem Client 40 gelöscht. Mittels der Laufzeit kann folglich die Zeitdauer bestimmt werden, die zwischen dem Setzen des Cookies, also der Aktivierung des Verweises 22, und beispielsweise der Bestellung eines Produkts verstreichen kann, innerhalb derer dem das Produkt bestellenden Benutzer 50 das Aktivieren des Verweises 22 zugeordnet werden soll.

In einem Schritt 119 wird eine Bewertung des Verweises 22 durchgeführt. Dazu werden die in den Schritten 109 und 117 übermittelten Daten berücksichtigt. In einer grundlegenden Bewertung des Verweises 22 könnten beispielsweise alle innerhalb einer vorgebbaren. Zeitspanne erfolgten Aktivierungen (clicks) des Verweises 22 summiert werden. Es ist ebenfalls vorstellbar, den Verweis 22 in Abhängigkeit eines Umsatzes zu bewerten, der auf dem ersten Server von Benutzern durchgeführt wurde, die durch Aktivieren des Verweises 22 die erste Netzwerkseite 11 angewählt haben. Eine Bewertung kann insbesondere auch die Daten eines Warenwirtschaftssystems miteinbeziehen. Beispielsweise kann ein Verweis 22 besonders niedrig bewertet werden, wenn er sich auf Produkte bezieht, die gegenwärtig nicht vorrätig sind oder bei denen Lieferschwierigkeiten bestehen. Auf der anderen Seite kann ein Verweis 22 hoch bewertet werden, wenn die diesem zugeordneten Produkte besonders günstig angeboten werden können, eine kurze Lieferzeit oder eine hohe Gewinnmarge besteht.

In einem Schritt 121 werden die Ergebnisse der Bewertung des Verweises 22 dem Nutzer 60 zur Verfügung gestellt. Dies kann beispielsweise mittels einer automatisch erzeugten E-Mail geschehen. Die Ergebnisse der Bewertung des Verweises 22 können ebenso in einem Bereich des Speicherelements 37 des dritten Servers 30, bzw. in einem Bereich des Speicherelements 17 des ersten Servers 10a, 10b, abgelegt werden, wobei der Nutzer 60, also beispielsweise der Betreiber des ersten Servers 10a, 10b, Zugriff auf diese Ergebnisse hat.

In einem Schritt 123 veranlasst der Nutzer 60 die Veränderung beziehungsweise die Entfernung des Verweises 22 auf der Netzwerkseite 21, beispielsweise dadurch, dass der Nutzer 60 dem Betreiber des zweiten Servers 20 eine entsprechende Aufforderung übermittelt. Der zweite Servers 20 kann dem Nutzer auch eine Schnittstelle, beispielsweise in Form eines Internet-Portals zur Verfügung stellen, die es dem Nutzer 60 ermöglicht, den Verweis 22 zu verändern bzw. zu entfernen, beispielsweise durch Verkürzen des dem Verweis 22 zugeordneten Textes, ergänzen von Details und/oder Hinzufügen einer Graphik.

In dem in der Figur 3 dargestellten Ausführungsbeispiel wird in einem Schritt 125 der Verweis 22 von der Netzwerkseite 21 entfernt. Wie bereits erwähnt, ist es jedoch denkbar, dass der lediglich verändert wird oder sogar unverändert bestehen bleibt. Ist der Verweis 22 ein Werbe-Banner, so kann vorgesehen sein, dieses Werbe-Banner durch ein anderes, werbewirksameres Werbe-Banner zu ersetzen.

In Figur 4 ist ein Ablaufdiagramm eines weiteren Ausführungsbeispiels des erfindungsgemäßen Verfahrens dargestellt. Bei diesem Ausführungsbeispiel ist dem zweiten Server 20 eine Suchmaschine zugeordnet, die in Abhängigkeit eines oder mehrerer übermittelter Suchbegriffe eine Liste mit Verweisen auf Netzwerkseiten erzeugt, die mit den übermittelten Suchbegriffen assoziiert werden können. Suchmaschinen werden beispielsweise eingesetzt, um eine Liste von Anbietern zu erhalten, die ein durch Suchbegriffe bestimmbares Produkt zum Kauf anbieten. Suchmaschinen sind im Internet beispielsweise unter www.google.de, www.lycos.de und www.altavista.com erreichbar. Die von der Suchmaschine in Abhängigkeit von einem Suchbegriff ermittelten Ergebnisse werden in einem als Ergebnisliste ausgestalteten HTML-Dokument an den Benutzer 50 übermittelt. Der Benutzer 50 hat die Möglichkeit, die auf der Ergebnisliste dargestellten Verweise zu aktivieren und die entsprechenden Netzwerkseiten anzufordern.

Das in Figur 4 dargestellte Ablaufdiagramm, startet in einem Schritt 200. In einem Schritt 202 fordert der Benutzer 50 von dem zweiten Server 20 eine Netzwerkseite an, die ein Texteingabefeld aufweist, in das der Benutzer mittels der Tastatur 53 einen Suchbegriff eingibt.

In einem Schritt 204 veranlasst der Client 40, dass der Suchbegriff an den zweiten Server 20 übertragen wird. In einem Schritt 205 werden Daten, die eine Benutzererkennung zulassen, sowie der Suchbegriff an den dritten Server 30 übermittelt. Außerdem kann von dem zweiten Server 20 oder dem dritten Server 30 ein Cookie erzeugt, an den Client 40 übermittelt und bei diesem abgespeichert werden. Das Cookie enthält beispielsweise Datum, Uhrzeit und den Suchbegriff.

In einem Schritt 206 wird auf dem zweiten Server 20 die zweite Netzwerkseite 21 erzeugt. Die zweite Netzwerkseite 21 enthält zumindest den Verweis 22, der auf die erste Netzwerkseite 11 des ersten Servers 10 verweist. Dabei kann der Verweis in Abhängigkeit von dem Suchbegriff erzeugt werden. Beispielsweise sind einem oder mehreren Suchbegriffen jeweils ein oder mehrere Produkte (bzw. Produktgruppen), die von dem ersten Server 10 angeboten werden, zugeordnet. Wird ein solcher Suchbegriff von dem Client 40 an die Suchmaschine übermittelt, so werden auf der zweiten Netzwerkseite Verweise zu allen Produkten bzw. Produktgruppen dargestellt, die diesem Suchbegriff zugeordnet sind. Dabei kann bei der Suchmaschine oder bei dem ersten Server 10 eine sogenannte Produktdatenbank abgelegt sein, in der eine Zuordnung von Suchbegriffen und Produkten bzw. Produktgruppen abgelegt ist.

In einem Schritt 208 wird die zweite Netzwerkseite 21 an den Client 40 übermittelt und dem Benutzer 50 angezeigt.

In einem Schritt 210 aktiviert der Benutzer 50 den Verweis 22, wodurch von dem Client 40 die Anforderung der ersten Netzwerkseite 11 an den ersten Server 10a, 10b übermittelt wird. In einem Schritt 211 werden an den ersten Server 10a, 10b und/oder an den dritten Server 30, Informationen übermittelt, die eine Erkennung des Benutzers 50 (Benutzerkennung) ermöglichen und eine Identifizierung des zweiten Servers 20 (die der zweiten Netzwerkseite 21 zugeordnete URL) ermöglichen.

In einem Schritt 212 wird erste Netzwerkseite 11 von dem ersten Server 10a, 10b über das Internet 5 an den Client 40 übermittelt. In einem Schritt 214 wird die erste Netzwerkseite 11 von dem Browser 42 interpretiert und auf dem Monitor 52 angezeigt. Die erste Netzwerkseite 11 enthält beispielsweise Darstellungen und Beschreibungen verschiedene Produkte, die durch Aktivierung einer entsprechenden Schaltfläche (sog. button) durch den Benutzer 50 bestellt werden können. In einem Schritt 216 bestellt der Benutzer 50 ein Produkt.

In einem Schritt 217 werden Informationen bezüglich des Benutzers 50 (Benutzerkennung) und/oder des bestellten Produkts (Produktkennung) an den dritten Server 30 übertragen.

In einem Schritt 219 wird eine Bewertung des auf der zweiten Netzwerkseite 21 dargestellten Verweises 22 durchgeführt. Dazu werden vorteilhafterweise Informationen verwendet, die in den Schritten 205, 211 und 217 übermittelt wurden. Die Bewertung des Verweises 22 kann analog zu der in dem Schritt 119 in Figur 3 dargestellten Verfahren durchgeführt werden.

Insbesondere wird eine Bewertung des Verweises 22 in Abhängigkeit von mehreren Informationen erfolgen. Beispielsweise kann es sinnvoll sein, bei einer knappen Verfügbarkeit eines Produkts aber eines besonders hohen Gewinns mit einem Produkt den zweiten Server 20 zu veranlassen, den diesem Produkt zugeordneten Verweis 22 noch häufiger auf der Netzwerkseite 21 darzustellen, eine größere und auffälligere graphische Repräsentation des Werbebanners zu veranlassen oder beispielsweise in der Produktdatenbank eine Zuordnung des Produkts bzw. einer dieses Produkt umfassenden Produktgruppe zu weiteren Suchbegriffen vorzusehen. Auch die Höhe einer Vergütung, die an den Betreiber des zweiten Servers 20 von dem Betreiber des ersten Servers 10a, 10b dafür gezahlt werden muss, dass dieser den Verweis 22 darstellt, kann bei der Bewertung des Verweises 22 berücksichtigt werden.

Derartige Informationen bezüglich der Produkte und Produktgruppen können auch von einem Warenwirtschaftsystem zur Verfügung gestellt werden. Warenwirtschaftssysteme können beispielsweise von einem weiteren Server zur Verfügung gestellte Informationssysteme sein, die neben einer Vielzahl von Informationen bezüglich der Produkte und Produktgruppen, weitere Informationen erzeugen, verwalten und zur Verfügung stellen, wie beispielsweise Statistiken und Prognosen bezüglich dieser Informationen. Warenwirtschaftssysteme können beispielsweise eine Verfügbarkeit des Produkts oder eine Anzahl von Stornierungen von Bestellungen des Produkts zur Verfügung stellen.

Es ist von besonderer Bedeutung für das erfindungsgemäße Verfahren, dass die Vielzahl der Informationen bezüglich des Verweises 22, des Benutzers 50, des Produkts und der Produktgruppe in beliebiger Kombination zur Bewertung des Verweises 22 verwendet werden können. Dazu können Verfahren aus der künstlichen Intelligenz vorteilhaft eingesetzt werden.

In einem Schritt 221 wird die Bewertung des Verweises 22 mit einem oder mehreren Schwellwerten verglichen, die beispielsweise von dem Nutzer 60 vorgegeben und auf dem dritten Server 30 abgelegt wurden. In einem Schritt 223 wird in Abhängigkeit von dem Ergebnis des Vergleichs geprüft, ob der Verweis 22 auf der zweiten Netzwerkseite 21 nicht mehr oder verändert dargestellt werden soll, wenn die zweite Netzwerkseite 21 erneut von dem zweiten Server an einen Client übermittelt wird.

Ist die Suchmaschine geeignet, zu einem bestimmten Produkt einen oder mehrere Anbieter zu finden, so sind jedem Anbieter eine Menge von Suchbegriffen und jedem Suchbegriff wiederum ein oder mehrere Produkte bzw. Produktgruppen zugeordnet. Es ist vorteilhaft, nur auf solche Netzwerkseiten verweisende Links anzuzeigen, die für einen Benutzer 50 wirklich von Interesse sind. Damit ist es insbesondere möglich, die Datenmenge der erzeugten und an den Client 40 zu übermittelnden Netzwerkseite möglichst klein zu halten.

Ergibt die in dem Schritt 223 durchgeführte Prüfung, dass der in dem Schritt 204 übermittelte Verweis 22 weiterhin dargestellt werden soll, so wird das Verfahren in dem Schritt 202 fortgesetzt. Ergibt die Prüfung in dem Schritt 223 jedoch, dass der Verweis 22 nicht mehr oder verändert dargestellt werden soll, so wird automatisch die dem zweiten Server 20 zugeordnete Suchmaschine veranlasst, den Verweis 22 aus der Menge der dem ersten Server 10a, 10b zugeordneten Verweise zu löschen bzw. durch einen anders gestalteten Verweis zu ersetzen. Daraufhin wird das Verfahren in dem Schritt 202 fortgesetzt.

Das Ergebnis der Prüfung kann ferner vorsehen, dass die Zuordnung der Produkte bzw. Produktgruppen zu einzelnen oder mehreren Suchwörtern verändert wird. Dazu kann eine automatische Veränderung der Einträge in der Produktdatenbank vorgesehen sein. Beispielsweise ist es in Abhängigkeit des Ergebnisses der Prüfung möglich, die Menge der einem Produkt bzw. einer Produktgruppe zugeordneten Suchbegriffe zu reduzieren oder diese Menge um weitere Suchbegriffe zu erweitern. Dies bedeutet im Umkehrschluss, dass die Menge der einem Suchbegriff zugeordneten Produkte bzw. Produktgruppen verändert wird. Beispielsweise kann ein in großen Mengen und besonders gut verfügbares Produkt, das mit einer hohen Gewinnmarge versehen ist und besonders häufig gekauft wird, noch weiteren Suchbegriffen zugeordnet werden. Auf der anderen Seite kann die einem Produkt, das nur sehr selten gekauft wird, zugeordnete Menge an Suchwörtern reduziert werden. Dies kann dazu führen, dass einem Produkt (einer Produktgruppe) kein Suchwort mehr zugeordnet wird, was gleichbedeutend damit ist, dass keinem Suchwort mehr das Produkt (die Produktgruppe) zugeordnet ist.

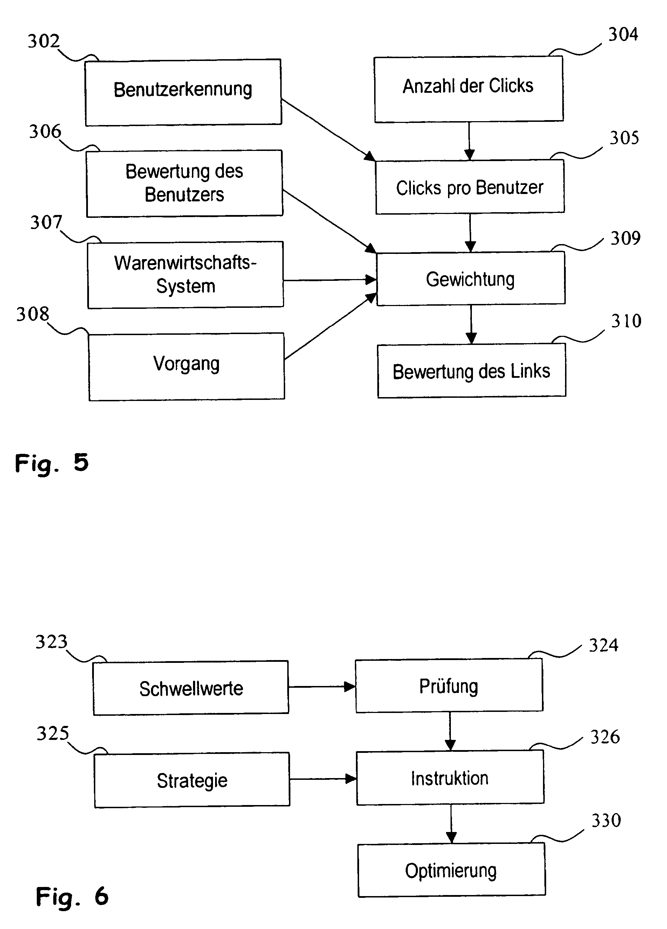

In Figur 5 ist die Bewertung des Verweises 22 beispielhaft schematisch dargestellt. Von einer Funktionseinheit 302 wird eine Benutzerkennung zur Verfügung gestellt. Diese erlaubt es, jede Aktivierung des Verweises 22 dem diese Aktivierung veranlassenden Benutzer, beispielsweise dem Benutzer 50, zuzuordnen.

In einer Funktionseinheit 304 wird die Anzahl aller innerhalb eines bestimmbaren Zeitraums durchgeführten Aktivierungen des Verweises 22 bestimmt und zur Verfügung gestellt. Dazu werden beispielsweise die in den Schritten 109 beziehungsweise 211 der Figuren 3 beziehungsweise 4 übermittelten Daten verwendet.

In einer Funktionseinheit 305 wird die Anzahl der Aktivierungen des Verweises 22 pro Benutzer bestimmt. Dazu werden die Gesamtzahl der Aktivierungen aus der Funktionseinheit 304 sowie die jeder Aktivierung zugeordnete Benutzerkennung aus der Funktionseinheit 302 verwendet.

Von einer Funktionseinheit 306 wird eine Bewertung eines Benutzers, beispielsweise des Benutzers 50, zur Verfügung gestellt. Eine Bewertung des Benutzers 50 kann beispielsweise hinsichtlich seiner Zahlungsmoral oder besonders häufig von diesem Benutzer 50 bestellten Produkte oder Produktgruppen (Bücher, Lebensmittel, etc.) durchgeführt werden.

In einer Funktionseinheit 307 werden Informationen eines Warenwirtschaftssystems zur Verfügung gestellt.

In einer Funktionseinheit 308 werden Informationen bezüglich des in den Schritten 116 beziehungsweise 216 der Figuren 3 beziehungsweise 4 dargestellten Vorgangs (bspw. Bestellung eines Produkts, Anwahl weiterer Netzwerkseiten von dem ersten Server 10a, 10b) in geeigneter Weise aufbereitet und zur Verfügung gestellt. Dazu bedient sich die Funktionseinheit 308 beispielsweise der in den Schritten 117 und 217 der Figuren 3 und 4 übermittelten Daten. Es ist vorstellbar, dass die Funktionseinheit 308 für jeden durchgeführten Vorgang Informationen bezüglich der Art des Vorgangs (Bestellung/Kauf von Informationen, Waren, Dienstleistungen, etc.), des getätigten Umsatzes und des Benutzers zur Verfügung stellt.

Mittels der von den Funktionseinheiten 305, 306, 307 und 308 zur Verfügung gestellten Informationen wird in einer Funktionseinheit 309 eine Gewichtung der Aktivierungen des Verweises 22 pro Benutzer vorgenommen. Dabei werden beispielsweise die von einem Benutzer A durchgeführten Aktivierungen *a* nicht gewertet (0·*a*), wenn der Benutzer A keine Bestellung getätigt hat. Die von einem Benutzer *B* durchgeführte Anzahl von Aktivierungen *b* des Verweises 22 werden beispielsweise niedrig gewichtet (0,5·*b*), falls der Benutzer *B* mit den Zahlungen regelmäßig in Verzug ist. Die von einem Benutzer *C* durchgeführten Aktivierungen *c* des Verweises 22 werden hoch gewichtet (2.*c*), falls der Benutzer *C* besonders hohe Umsätze über Netzwerkseiten des ersten Servers 10a, 10b tätigt.

In einer Funktionseinheit 310 wird die eigentliche Bewertung des Verweises 22 durchgeführt. Dazu werden die von der Funktionseinheit 309 zur Verfügung gestellten Informationen in geeigneter Weise kombiniert. Dies geschieht beispielsweise durch Addition der mittels der Funktionseinheit 309 zur Verfügung gestellten Daten (0·*a*+0,5·*b*+2·*c*). Selbstverständlich ist es auch vorstellbar, dass der Verweis 22 ausschließlich mittels der Informationen des Warenwirtschaftssystems der Funktionseinheit 307 gewichtet und bewertet wird.

In Figur 6 sind Funktionseinheiten schematisch dargestellt, wie sie zur Durchführung der Optimierung des Verweises 22 verwendet werden können. In einer Funktionseinheit 324 wird geprüft, ob der bewertete Verweis 22 optimiert werden soll. Dazu wird ein von der Funktionseinheit 323 zur Verfügung gestellter Schwellwert verwendet. Wird in der Funktionseinheit 324 festgestellt, dass die Bewertung des Verweises 22 unter dem von der Funktionseinheit 323 zur Verfügung gestellten Schwellwert liegt, so kann die Funktionseinheit 324 eine Optimierung des Verweises 22 veranlassen. Dazu wird in einer Funktionseinheit 326 in Abhängigkeit einer von einer Funktionseinheit 325 zur Verfügung gestellten Strategie eine Instruktion generiert.

Ist dem Verweis 22 beispielsweise eine Menge von Suchbegriffen auf einer Suchmaschine zugeordnet, so kann die Strategie ein Entfernen oder den Austausch einzelner einem Produkt bzw. einer Produktgruppe innerhalb einer Produktdatenbank zugeordneten Suchbegriffe vorsehen.

Ist der Verweis 22 beispielsweise ein grafisch ausgestaltetes Werbe-Banner, so kann die Strategie auch vorsehen, dass das Werbe-Banner entfernt oder durch ein anderes, werbewirksameres ersetzt wird. Es ist auch vorstellbar, eine textuelle Repräsentation eines Verweises 22 durch eine unterschiedlich gestaltete textuelle Repräsentation zu ersetzen. Ist der Verweis 22 direkt einem Produkt zugeordnet, so ist es insbesondere vorstellbar, eine Produktbeschreibung anzupassen oder einen anderen, dem Produkt zugeordneten Preis anzugeben.

In Abhängigkeit der Strategie wird in der Funktionseinheit 326 eine Instruktion in einem geeigneten Format generiert und an den zweiten Server 20 übermittelt. Ein geeignetes Format können beispielsweise die Instruktionen für eine sich auf dem zweiten Server befindende Datenbank sein, beispielsweise (SQL) (Structured Query Language). Die Datenbank kann beispielsweise die Produktdatenbank sein oder mit der Produktdatenbank kommunizieren.

In einer Funktionseinheit 330 wird die Optimierung des Verweises 22 durchgeführt. Dazu werden die von der Funktionseinheit 326 erzeugten Instruktionen ausgeführt, was beispielsweise das Entfernen oder Verändern des Verweises 22 von der dem zweiten Server 20 zugeordneten Datenbank oder das Verändern der einem Produkt bzw. einer Produktgruppe zugeordneten Suchbegriffe bedeuten kann.

Selbstverständlich ist es möglich, weitere Informationen bei der Bewertung 310 des Verweises 22, der Prüfung 324 der Bewertung, beziehungsweise der Generierung 326 der Instruktionen mit zu berücksichtigen. Dies sind insbesondere die oben genannten Informationen bezüglich des Produkts und/oder der Produktgruppe.
Es ist auch vorstellbar, das Ergebnis der für die Funktionseinheit 324 erzeugten Prüfung der Bewertung des Verweises 22 in geeigneter Form (beispielsweise per E-Mail oder über ein Portal) dem Nutzer 60 zur Verfügung zu stellen. In diesem Fall könnte der Nutzer 60 selbständig eine Optimierung des Verweises 22 veranlassen.

Eine andere Ausführungsform könnte auch eine Bewertung des Verweises 22 ohne Durchführung einer Gewichtung 309 vorsehen. In diesem Fall könnte beispielsweise auf die Funktionseinheiten 309, 306 verzichtet werden.

Bei den in den Figuren 3 und 4 dargestellten Ablaufdiagrammen von Ausführungsbeispielen des erfindungsgemäßen Verfahrens ist es möglich, einzelne Schritte zu verändern, wegzulassen oder neue Schritte hinzuzufügen. Beispielsweise können dem Benutzer 50 mehrere Cookies von dem ersten 10a, 10b, dem zweiten 20 und/oder dem dritten 30, 38 Server gesetzt werden. Damit könnte ein Verhalten des Benutzers 50 noch genauer analysiert werden und eine noch präzisere Auswahl und Ausgestaltung der auf der zweiten Netzwerkseite 21 dargestellten Verweise erfolgen.

## Patentansprüche

1. Verfahren zum Optimieren eines Verweises (22), der auf eine erste Netzwerkseite (11) eines ersten Servers (10a, 10b) verweist und auf einer zweiten Netzwerkseite (21) eines zweiten Servers (20) dargestellt wird, wobei
- mittels eines einem Benutzer (50) zugeordneten Clients (40) die zweite Netzwerkseite (21) von dem zweiten Server (20) angefordert wird;
- die zweite Netzwerkseite (21) von dem zweiten Server (20) an den Client (40) übertragen wird; und
- der Benutzer (50) den auf der zweiten Netzwerkseite (21) dargestellten Verweis (22) aktiviert,
**dadurch gekennzeichnet, dass**
- in Abhängigkeit des durch den Benutzer (50) aktivierten Verweises (22) automatisch eine Bewertung (310) des Verweises (22) durchgeführt wird, wobei die Bewertung (310) in Abhängigkeit von einer Häufigkeit (304) der Aktivierung des Verweises (22) durch beliebige Benutzer und in Abhängigkeit von mindestens einem, auf dem ersten Server (10a, 10b) von dem Benutzer (50) initiierten Vorgang (308) durchgeführt wird; und
- bei einem statischen Verweis (22) in Abhängigkeit der Bewertung des Verweises (22) automatisch geprüft wird, ob der statische Verweis (22) auf der zweiten Netzwerkseite (21) weiterhin dargestellt werden soll oder bei einem dynamischen Verweis (22), der in Abhängigkeit mindestens eines vorgebbaren Parameters erzeugt wird, in Abhängigkeit der Bewertung (310) des Verweises (22) automatisch geprüft wird, ob der mindestens eine und/oder ein anderer vorgebbarer Parameter verändert werden soll.

2. Verfahren nach Anspruch 1, **dadurch gekennzeichnet, dass** die Bewertung in Abhängigkeit eines, auf dem ersten Server (10a, 10b) von dem Benutzer (50) initiierten Kauf eines Produkts oder einer, auf dem Server (10a, 10b) von dem Benutzer (50) initiierten Anforderung einer Dienstleistung, einer Information und/oder einer weiteren, dem ersten Server (10a, 10b) zugeordneten Netzwerkseite durchgeführt wird.

3. Verfahren nach Anspruch 1 oder 2, **dadurch gekennzeichnet, dass** bei dem Aktivieren des Verweises automatisch (22) eine Quelleninformation abgespeichert wird und die Bewertung des Verweises (22) in Abhängigkeit der Quelleninformation durchgeführt wird.

4. Verfahren nach Anspruch 3, **dadurch gekennzeichnet, dass** anhand der Quelleninformationen und/oder anhand von Benutzerinformationen automatisch eine Bewertung (306) des Benutzers (50) durchgeführt wird.

5. Verfahren nach Anspruch 4, **dadurch gekennzeichnet, dass** zur Durchführung der Bewertung (306) des Benutzers (50) dem Benutzer (50) eine Benutzerkennung (302) zugeordnet wird und die Bewertung (310) des Verweises (22) zusätzlich in Abhängigkeit der Benutzerkennung (302) und/oder der Bewertung (306) des Benutzers (50) durchgeführt wird.

6. Verfahren nach einem der vorangehenden Ansprüche, **dadurch gekennzeichnet, dass** die Bewertung (310) des Verweises (22) und/oder eine Prüfung (324) der Bewertung des Verweises (22) zusätzlich in Abhängigkeit eines von einem bestimmbaren Nutzer (60) vorgebbaren Schwellwertes durchgeführt wird und/oder dass das Ergebnis der Bewertung (310) des Verweises (22) automatisch derart abgespeichert wird, dass es von dem bestimmbaren Nutzer (60) abrufbar ist.

7. Verfahren nach einem der vorangehenden Ansprüche, **dadurch gekennzeichnet, dass** bei einem statischen Verweis (22) in Abhängigkeit des Ergebnisses der Prüfung (324) der Verweis (22) auf der zweiten Netzwerkseite (21) automatisch entfernt wird und/oder bei einem dynamischen Verweis (22) in Abhängigkeit des Ergebnisses der Prüfung (324) der mindestens eine vorgebbare Parameter automatisch geändert wird.

8. Verfahren nach einem der vorangehenden Ansprüche, **dadurch gekennzeichnet, dass**
- dem zweiten Server (20) eine Suchmaschine zugeordnet ist;
- der mindestens eine vorgebbare Parameter durch einen Suchbegriff bestimmt wird;
- der Benutzer (50) den mindestens einen Suchbegriff an die Suchmaschine übermittelt;
- in Abhängigkeit des übermittelten Suchbegriffs die den Verweis (22) auf die erste Netzwerkseite (11) enthaltende zweite Netzwerkseite (21) automatisch erzeugt wird; und
- in Abhängigkeit des Ergebnisses der Prüfung (324) der Bewertung (310) des Verweises (22) die Suchmaschine veranlasst wird, den Verweis (22) auf der zweiten Netzwerkseite (21)nicht mehr darzustellen, wenn diese erneut erzeugt wird.

9. Verfahren nach einem der vorangehenden Ansprüche, **dadurch gekennzeichnet, dass** dem Verweis (22) ein Produkt und/oder eine Produktgruppe zugeordnet ist.

10. Verfahren nach Anspruch 9, **dadurch gekennzeichnet, dass** bei dem Aktivieren des Verweises (22) eine Kennung des dem Verweis (22) zugeordneten Produkts und/oder der Produktgruppe an den ersten Server (10a, 10b) übermittelt wird.

11. Verfahren nach Anspruch 9 oder 10, **dadurch gekennzeichnet, dass** die Bewertung (310) des Verweises (22) zusätzlich in Abhängigkeit mindestens einer Information bezüglich des dem Verweis (22) zugeordneten Produkts und/oder der Produktgruppe erfolgt.

12. Verfahren nach einem der Ansprüche 9 bis 11, **dadurch gekennzeichnet, dass** als die mindestens eine Information bezüglich des Produkts und/oder als die mindestens eine Information bezüglich der Produktgruppe Informationen aus einem Warenwirtschaftssystem verwendet werden.

13. Verfahren nach Anspruch 12, **dadurch gekennzeichnet, dass** die Informationen aus dem Warenwirtschaftssystem automatisch für die Bewertung zur Verfügung gestellt werden.

14. Computersystem (1a, 1b) umfassend einen ersten Server (10a, 10b), einen zweiten Server, einen einem Benutzer (50) zugeordneten Client (40), mindestens einen auf eine erste Netzwerkseite (11) des ersten Servers (10a, 10b) verweisenden und auf einer zweiten Netzwerkseite (21) des zweiten Servers (20) darstellbaren Verweis (22) und ein Kommunikationsnetzwerk, mittels dessen eine Kommunikation zwischen dem ersten Server (10a, 10b) und dem Client (40) sowie zwischen dem zweiten Server (20) und dem Client (40) möglich ist, wobei
- mittels des Clients (40) von dem zweiten Server eine Netzwerkseite anforderbar ist;
- die zweite Netzwerkseite (21) von dem zweiten Server an den Client (40) übermittelbar ist;
- der auf der zweiten Netzwerkseite (21) dargestellte Verweis (22) aktivierbar ist;
**dadurch gekennzeichnet, dass**
- in Abhängigkeit des durch den Benutzer (50) aktivierten Verweises (22) automatisch eine Bewertung (310) des Verweises (22) durchführbar ist;
- die Bewertung in Abhängigkeit einer Häufigkeit (304) der Aktivierung des Verweises (22) durchführbar ist;
in Abhängigkeit der Bewertung des Verweises (22) eine Prüfung (324) durchführbar ist, um zu ermitteln, ob der Verweis (22) weiterhin auf der zweiten Netzwerkseite (21) dargestellt werden soll; und
- in Abhängigkeit der Bewertung (310) des Verweises (22) eine Prüfung (324) durchführbar ist, um zu ermitteln, ob mindestens ein vorgebbarer Parameter verändert werden soll, falls der Verweis (22) auf der zweiten Netzwerkseite (21) in Abhängigkeit des mindestens einen vorgebbaren Parameters erzeugt wird.

15. Computersystem (1a, 1b) nach Anspruch 14, **dadurch gekennzeichnet, dass** das Computersystem (1a, 1b) zur Durchführung eines Verfahrens nach einem der Ansprüche 2 bis 13 programmiert ist.

16. Computerprogramm (38), das auf einem Rechengerät, insbesondere auf einem Server (10a, 10b, 20, 30) in einem Computersystem (1a, 1b), ablauffähig ist, **dadurch gekennzeichnet, dass** das Computerprogramm (38) zur Durchführung eines Verfahrens nach einem der Ansprüche 1 bis 13 programmiert ist.

17. Computerprogramm (38) nach Anspruch 16, **dadurch gekennzeichnet, dass** das Computerprogramm (38) auf einem Speicherelement (17, 27, 37), insbesondere auf einem Random-Access-Memory, auf einem Read-Only-Memory oder auf einem Flash-Memory, abgespeichert ist.

## Claims

1. A method for optimizing a link (22) to a first webpage (11) of a first server (10a, 10b) and a second webpage (21) of a second server (20), in which
- the second webpage (21) is requested from the second server (20) by means of a client (40) associated with a user (50);
- the second webpage (21) is transmitted from the second server (20) to the client (40); and
- the user (50) activates the link (22) displayed on the second webpage (21),
**characterized in that**
- as a function of the link (22) activated by the user (50), an assessment (310) of the link (22) is automatically performed, the assessment (310) being performed as a function of a frequency (304) of activation of the link (22) by arbitrary users and as a function of at least one operation (308) initiated in the first server (10a, 10b) by the user (50); and
- in the case of a static link (22), checking is done automatically, as a function of the assessment of the link (22), as to whether the static link (22) should continue to be displayed on the second webpage (21), or in the case of a dynamic link (22) that is generated as a function of at least one predeterminable parameter, checking is done automatically, as a function of the assessment (310) of the link (22), as to whether the at least one predeterminable parameter and/or another predeterminable parameter should be changed.

2. The method according to claim 1, **characterized in that** the assessment is performed as a function of a purchase of a product, initiated in the first server (10a, 10b) by the user (50), or a request, initiated in the server (10a, 10b) by the user (50), for a service, information, and/or a further webpage associated with the first server (10a, 10b).

3. The method according to claim 1 or 2, **characterized in that** upon activation of the link (22), source information is automatically stored in memory, and the assessment of the link (22) is performed as a function of the source information.

4. The method according to claim 3, **characterized in that** on the basis of the source information and/or user information, an assessment (306) of the user (50) is automatically performed.

5. The method according to claim 4, **characterized in that** for performing the assessment (306) of the user (50), a user ID (302) is associated with the user (50), and the assessment (310) of the link (22) is additionally performed as a function of the user ID (302) and/or of the assessment (306) of the user (50).

6. The method according to one of the foregoing claims, **characterized in that** the assessment (310) of the link (22) and/or checking (324) of the assessment of the link (22) is additionally performed as a function of a threshold value that can be predetermined by a predefined user (60), and/or that the outcome of the assessment (310) of the link (22) is automatically stored in memory such that it can be called up by the definable user (60).

7. The method according to one of the foregoing claims, **characterized in that** in the case of a static link (22), as a function of the outcome of the checking (324), the link (22) on the second webpage (21) is automatically deleted, and/or in the case of a dynamic link (22), as a function of the outcome of the checking (324), the at least one predeterminable parameter is automatically changed.

8. The method according to one of the foregoing claims, **characterized in that**
- a search engine is associated with the second server (20);
- the at least one predeterminable parameter is defined by a search term;
- the user (50) forwards the at least one search term to the search engine;
- as a function of the search term forwarded, the second webpage (21) containing the link (22) to the first webpage (11) is automatically generated; and
- as a function of the outcome of the checking (324) of the assessment (310) of the link (22), the search engine is made not to display the link (22) on the second webpage (21) any longer, the next time that webpage is generated.

9. The method according to one of the foregoing claims, **characterized in that** a product and/or a product group is associated with the link (22).

10. The method according to claim 9, **characterized in that** upon activation of the link (22), an ID for the product and/or the product group associated with the link (22) is forwarded to the first server (10a, 10b).

11. The method according to claim 9 or 10, **characterized in that** the assessment (310) of the link (22) is additionally effected as a function of at least one piece of information about the product and/or the product group associated with the link (22).

12. The method according to one of claims 9 through 11, **characterized in that** information from a merchandise management system is used as the at least one piece of information about the product and/or as the at least one piece of information about the product group.

13. The method according to claim 12, **characterized in that** the information from the merchandise management system is automatically made available for the assessment.

14. A computer system (1a, 1b), including a first server (10a, 10b), a second server, a client (40) associated with a user (50), at least one link (22), referring to a first webpage (11) of the first server (10a, 10b) and capable of being displayed on a second webpage (21) of the second server (20), and a communications network by means of which communication is possible both between the first server (10a, 10b) and the client (40) and between the second server (20) and the client (40), in which
- by means of the client (40), a webpage can be requested from the second server;
- the second webpage (21) can be forwarded to the client (40) from the second server;
- the link (22) displayed on the second webpage (21) is activatable;
**characterized in that**
- as a function of the link (22) activated by the user (50), an assessment (310) of the link (22) can be automatically performed;
- the assessment can be performed as a function of a frequency (304) of the activation of the link (22);
- as a function of the assessment of the link (22), checking (324) can be performed in order to ascertain whether the link (22) should continue to be displayed on the second webpage (21); and
- as a function of the assessment (310) of the link (22), checking (324) can be performed in order to ascertain whether at least one predeterminable parameter should be changed, in the event that the link (22) on the second webpage (21) is generated as a function of the at least one predeterminable parameter.

15. The computer system (1a, 1b) according to claim 14, **characterized in that** the computer system (1a, 1b) is programmed for performing a method according to one of claims 2 through 13.

16. A computer program (38), which is capable of being executed on a computer device, in particular on a server (10a, 10b, 20, 30) in a computer system (1a, 1b), **characterized in that** the computer program (38) is programmed for performing a method according to one of claims 1 through 13.

17. The computer program (38) according to claim 16, **characterized in that** the computer program (38) is stored in a memory element (17, 27, 37), in particular a random access memory, a read-only memory, or a flash memory.

## Revendications

1. Procédé d'optimisation d'un lien (22), qui se réfère à une première page web (11) d'un premier serveur (10a, 10b) et est affiché sur une deuxième page web (21) d'un deuxième serveur (20), moyennant quoi :
- à l'aide d'un client (40) associé à un utilisateur (50), la deuxième page web (21) est appelée par le deuxième serveur (20) ;
- la deuxième page web (21) est transférée du deuxième serveur (20) au client (40) ; et
- l'utilisateur (50) active le lien (22) affiché sur la deuxième page web (21),
**caractérisé en ce que**
- en fonction du lien (22) activé par l'utilisateur (50), une évaluation (310) du lien (22) est automatiquement effectuée, moyennant quoi l'évaluation (310) est réalisée en fonction de la fréquence (304) de l'activation du lien (22) par un utilisateur quelconque et en fonction d'au moins une procédure (308) initiée sur le premier serveur (10a, 10b) par l'utilisateur (50) ; et
- dans le cas d'un lien statique (22), en fonction de l'évaluation du lien (22), on vérifie automatiquement si le lien statique (22) doit de nouveau être affiché sur la deuxième page web (21), ou, dans le cas d'un lien dynamique (22), qui est établi en fonction d'au moins un paramètre pouvant être prédéfini, en fonction de l'évaluation (310) du lien (22), on vérifie automatiquement si le au moins un et / ou autre paramètre pouvant être prédéfini doit être modifié.

2. Procédé selon la revendication 1, **caractérisé en ce que** l'évaluation est effectuée en fonction de l'achat d'un produit initié sur le premier serveur (10a, 10b) par l'utilisateur (50) ou de la demande d'un service, initiée sur le serveur (10a, 10b) par l'utilisateur (50), d'une information et / ou d'une autre page web associée au premier serveur (10a, 10b).

3. Procédé selon l'une quelconque des revendications 1 ou 2, **caractérisé en ce que**, lors de l'activation du lien (22), une information source est automatiquement enregistrée, et l'évaluation du lien (22) est réalisée en fonction de l'information source.

4. Procédé selon la revendication 3, **caractérisé en ce que**, à l'aide des informations sources et / ou des informations utilisateur, une évaluation (306) de l'utilisateur (50) est automatiquement réalisée.

5. Procédé selon la revendication 4, **caractérisé en ce que**, pour réaliser l'évaluation (306) de l'utilisateur (50), une reconnaissance d'utilisateur (302) est associée à l'utilisateur, et l'évaluation (310) du lien (22) est en outre effectuée en fonction de la reconnaissance d'utilisateur (302) et / ou de l'évaluation (306) de l'utilisateur (50).

6. Procédé selon l'une quelconque des revendications précédentes, **caractérisé en ce que** l'évaluation (310) du lien (22) et / ou une vérification (324) de l'évaluation du lien (22) est en outre effectuée en fonction d'une valeur seuil pouvant être prédéfinie par un utilisateur pouvant être prédéterminé (60) et / ou **en ce que** le résultat de l'évaluation (310) du lien (22) est automatiquement enregistré de telle sorte qu'il peut être appelé par l'utilisateur pouvant être prédéterminé (60).

7. Procédé selon l'une quelconque des revendications précédentes, **caractérisé en ce que**, dans le cas d'un lien statique (22) en fonction du résultat de la vérification (324), le lien (22) sur la deuxième page web (21) est automatiquement éliminé et / ou dans le cas d'un lien dynamique (22) en fonction du résultat de la vérification (324), le au moins un paramètre pouvant être prédéfini est automatiquement modifié.

8. Procédé selon l'une quelconque des revendications précédentes, **caractérisé en ce que** :
- au deuxième serveur (20) est associé un appareil de recherche ;
- le au moins un paramètre pouvant être prédéfini est déterminé par un critère de recherche ;
- l'utilisateur (50) transmet au moins un critère de recherche à l'appareil de recherche ;
- en fonction du critère de recherche transmis, la deuxième page web (21) contenant le lien (22) vers la première page web (11) est automatiquement créé ; et
- en fonction du résultat de la vérification (324) de l'évaluation (310) du lien (22), l'appareil de recherche est incité à ne plus afficher le lien (22) sur la deuxième page web (21), lorsque celle-ci est de nouveau créée.

9. Procédé selon l'une quelconque des revendications précédentes, **caractérisé en ce que**, au lien (22) est associé un produit et / ou un groupe de produits (324).

10. Procédé selon la revendication 9, **caractérisé en ce que**, lors de l'activation du lien (22), une connaissance du produit associé au lien (22) et / ou du groupe de produits est transmise au premier serveur (10a, 10b).

11. Procédé selon l'une quelconque des revendications 9 ou 10, **caractérisé en ce que** l'évaluation (310) du lien (22) se produit en outre en fonction d'au moins une information concernant le produit et / ou le groupe de produits associé au lien (22).

12. Procédé selon l'une quelconque des revendications 9 à 11, **caractérisé en ce que**, en tant que la au moins une information concernant le produit et / ou la au moins une information concernant le groupe de produits, on utilise des informations provenant d'un système d'échange de marchandises.

13. Procédé selon la revendication 12, **caractérisé en ce que** les informations provenant du système d'échange de marchandises est automatiquement mis à disposition pour l'évaluation.

14. Système informatique (1a, 1b) comprenant un premier serveur (10a, 10b), un deuxième serveur, un client (40) associé à l'utilisateur (40), au moins un lien (22) renvoyant à une première page web (11) du premier serveur (10a, 10b) et pouvant être affiché sur une deuxième page web (21) du deuxième serveur (20), et un réseau de communication à partir duquel une communication est possible entre le premier serveur (10a, 10b) et le client (40), ainsi qu'entre le deuxième serveur (20) et le client (40), moyennant quoi
- grâce au client (40), une page web peut être appelée à partir du deuxième serveur ;
- la deuxième page web (21) peut être transmise du deuxième serveur au client (40) ;
- le lien (22) affiché sur la deuxième page web (21) peut être activé ;
**caractérisé en ce que**
- en fonction du lien (22) activé par l'utilisateur (50), une évaluation (310) du lien peut être automatiquement effectuée ;
- l'évaluation peut être effectuée en fonction de la fréquence (304) de l'activation du lien (22) ;
- en fonction de l'évaluation du lien (22), une vérification (324) peut être effectuée, afin d'indiquer si le lien (22) doit encore être affiché sur la deuxième page web (21) ; et
- en fonction de l'évaluation (310) du lien (22), une vérification (324) peut être effectuée pour indiquer si au moins un paramètre pouvant être prédéfini doit être modifié, au cas où le lien (22) sur la deuxième page web est créé en fonction du au moins un paramètre pouvant être prédéfini.

15. Système informatique (1a, 1b) selon la revendication 14, **caractérisé en ce que** le système informatique (1a, 1b) est programmé afin de mettre en oeuvre un procédé selon l'une quelconque des revendications 2 à 13.

16. Programme informatique (38), qui peut être exécuté sur un calculateur, en particulier sur un serveur (10a, 10b, 20, 30) dans un système informatique (1a, 1b), **caractérisé en ce que** le programme informatique (38) est programmé pour mettre en oeuvre un procédé selon l'une quelconque des revendications 1 à 13.

17. Programme informatique (38), selon la revendication 16, **caractérisé en ce que** le programme informatique (38) est enregistré sur un élément de mémoire (17, 27, 37), en particulier sur une mémoire à accès aléatoire, sur une mémoire en lecture seule ou une mémoire flash.
